# EUROPÄISCHE PATENTSCHRIFT

(11) **EP 0 478 928 B1**
(45) Veröffentlichungstag und Bekanntmachung des Hinweises auf die Patenterteilung: **09.11.1994**
(21) Anmeldenummer: 91113224.9
(22) Anmeldetag: 06.08.1991
(51) Int. Cl.: F16B 37/04, F16B 39/30

(54) **Hammermutter**
Screw impeding nut
Ecrou inhibant la vis

(30) Priorität: 05.10.1990 DE 4031602
(43) Veröffentlichungstag der Anmeldung: 08.04.1992
(73) Patentinhaber: Flaig, Hartmut, D-78554 Aldingen (DE)
(72) Erfinder: Flaig, Hartmut, D-78554 Aldingen (DE)
(74) Vertreter: Liesegang, Roland, Dr.-Ing.

(56) Entgegenhaltungen:
- EP-A- 0 063 677
- EP-A- 0 441 224
- DE-A- 2 247 289
- DE-A- 2 527 557
- US-E- 31 284

## Beschreibung

Die Erfindung betrifft eine Mutter mit Hemmung zum Einschrauben eines Gewindebolzens.

In neuerer Zeit sind Verbindungssysteme auf den Markt gekommen, bei denen sogenannte Hammermuttern Verwendung finden. Diese Hammermuttern haben in etwa die äußere Gestalt eines Hammerkopfs, d.h., ihre Erstreckung in der zur Gewindeachse senkrechten Ebene ist in einer Achse wesentlich geringer als in der dazu senkrechten Achse. Damit können diese Hammermuttern in den Einführschlitz von hinterschnittene Nuten aufweisenden Bauelementen, beispielsweise Schienen, mühelos eingeführt und dann um 90° bis Anschlag (mutternspezifische Konstruktion) gedreht werden, wobei sie dann nicht mehr aus der Nut herausgezogen werden können, weil in dieser Position die Mutterbreite größer ist als die Breite des Einführschlitzes. In die Hammermutter wird ein Gewindebolzen eingeschraubt, der außerhalb des erwähnten Einführschlitzes mit einem zweiten Bauelement verbunden ist. Durch den Schraubvorgang wird die Hammermutter gegen die Hinterschneidung der Nut gepreßt, womit sich eine feste Verbindung zwischen den beiden Bauelementen ergibt.

Wünnschenswert ist es nun, Hammermuttern, wie auch andere übliche Muttern, mit einer Hemmung zu versehen, damit die Mutter beim Einschrauben der Schraube um 90° bis Anschlag gedreht wird und langerichtig, wie vorbeschrieben, beim Kraftangriff in der Schiene liegt. Beim Ausschrauben dreht die Hemmung des Gewindes die Mutter exakt wieder um 90° zurück, so daß die Demontage einfachst erfolgen kann. Des weiteren bewirkt die Hemmung, daß die Verbindung bei starken Vibrationen eine Lockerung verhindert.

Aus der EP-0063677 ist eine selbsthemmende Gewindeform bekannt, bei der die Gewindespitzen des Bolzens beim Aufschrauben der Mutter verformt werden. Das Muttergewinde weist dabei zwei unterschiedliche Flankenwinkel auf, was die Herstellung aufwendig macht.

Bei der EP-0441224 sind im Muttergewinde Vertiefungen ausgebildet, wobei eine Klemmwirkung durch unterschiedliche Steilheit der Gewindeflanken erzielt wird. Auch diese Gewindeform ist kompliziert in der Herstellung, da sich die Flankenform im Querschnitt über der Gewindelänge ändert.

Aufgabe der vorliegenden Erfindung ist es deshalb, eine Mutter mit exakt definierter Hemmung so auszubilden, daß die Stärke der Hemmung über mehrere Schraubvorgänge im wesentlichen gleich bleibt und daß die Mutter trotzdem mit vertretbaren Kosten herstellbar ist.

Diese Aufgabe wird durch Anspruch 1 gelöst.

Die Erfindung gibt auch ein Herstellungsverfahren an.

Nachfolgend wird die Erfindung an einem Ausführungsbeispiel anhand der Zeichnungen näher erläutert. Es zeigen:
- Fig. 1: eine übliche Hammermutter in Seiten- und Draufsicht, und
- Fig. 2: eine Skizze zur Erläuterung einer bevorzugten Ausführungsform der Erfindung.

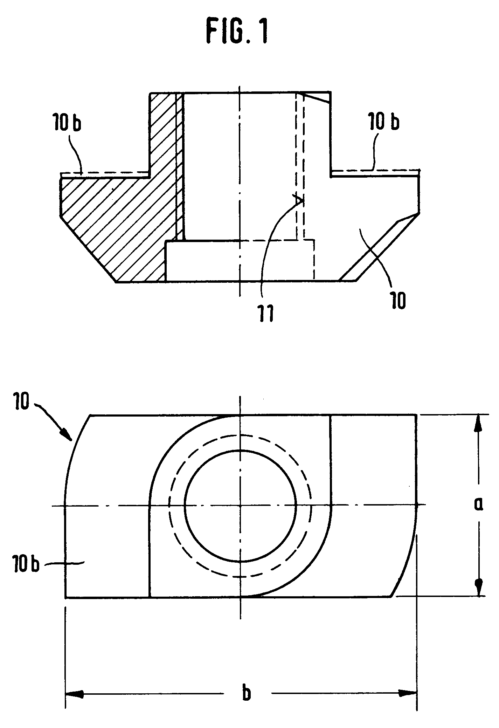

Fig. 1 zeigt, wie erwähnt, eine bekannte Hammermutter in Seitenansicht und in Draufsicht. In der axialen Durchbohrung dieser im ganzen mit 10 bezeichneten Mutter befindet sich ein Innengewinde 11. Die Erstreckung der Mutter in der einen Richtung ist mit a bezeichnet, wobei a kleiner ist als die Breite des Einführschlitzes der hinterschnittenen Nut, in welche die Mutter 10 eingesetzt werden soll, die Erstreckung in der anderen, dazu senkrechten Richtung ist mit b bezeichnet, wobei b wesentlich größer ist als die Breite des Einführschlitzes, so daß die Flächen 10b der Mutter 10 Anschlagflächen zur Anlage an der Hinterschneidung der erwähnten Nut darstellen.

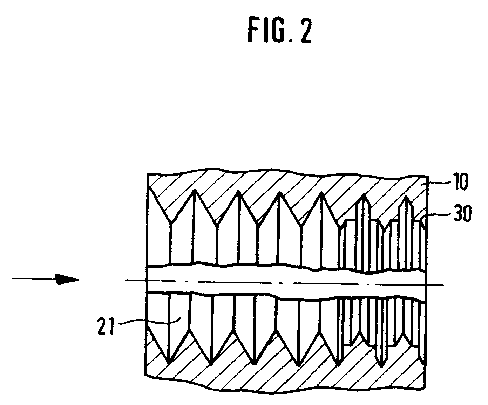

Bei der bevorzugten Ausführungsform der Erfindung nach Fig. 2 stehen von den Gewindeflanken der letzten beiden Gewindegänge Rippen 30 ab, wie dies aus der Zeichnung klar ersichtlich ist. Diese Rippen wirken so, daß beim Einschrauben des Gewindebolzens bei Erreichen der letzten beiden Gewindegänge eine Hemmung auftritt, d.h., die Mutter wird um 90° gedreht, ehe eine Vorspannung in die Verbindung eingebracht wird und ist somit lagerichtig plaziert. Der Gewindebolzen kann festgezogen werden, wobei das Zurückschrauben des Gewindebolzens dann nur mittels einer die Hemmung überwindenden Kraft durchgeführt werden kann. Des weiteren ist ungewolltes Lockern der Schraubverbindung ausgeschlossen, auch bei stärkeren Vibrationen.

Um hier einen Anhaltspunkt zu geben, sei angegeben, daß die Rippen etwa 0,05 mm über die Gewindeflanken hinauszuragen, bezogen auf eine Normmutter M6. Mit diesen Zahlenwerten beträgt die Stärke der Hemmung etwa 1 bis 2 Nm.

Die Herstellung der Rippen 30 im Muttergewinde erfolgt in der Weise, daß in den das Muttergewinde schneidenden Gewindebohrer 21 Nuten eingeschnitten bzw. eingefräst werden, und zwar in die beiden der Bohrerspitze benachbarten Gewindegänge. Die Tiefe der Nuten richtet sich nach der gewünschten Höhe der Rippen im Muttergewinde. Der Gewindebohrer 21 ist nach dem Einschneiden des Gewindes in Gegenrichtung wieder aus der Mutter herauszuschrauben, weil ansonsten die nachfolgenden, keine Nuten aufweisenden Gewindegänge des Bohrers 21 die entstandenen Rippen wegschneiden würden bzw. der Gewindebohrer 21 in der Mutter 10 festfährt.

Die beschriebenen Ausführungsformen können Abwandlungen erfahren, ohne den Bereich der Erfindung zu verlassen. Dies betrifft insbesondere die Zahlenangaben für die Höhe und Breite der Rippen und die Anzahl der die Vorsprünge aufweisenden Gewindegänge.

## Patentansprüche

1. Mutter mit Hemmung zum Einschrauben eines Gewindebolzens, dadurch gekennzeichnet, daß die in Einschraubrichtung des Gewindebolzens letzten Gewindegänge des Muttergewindes mit von ihren Gewindeflanken abstehenden, rippenartigen Vorsprüngen (30) gefertigt sind.

2. Mutter nach Anspruch 1, dadurch gekennzeichnet, daß die rippenartigen Vorsprünge bezogen auf eine Normmutter M6 um etwa 0,05 mm über die Gewindeflanken hinausragen.

3. Mutter nach Anspruch 1 oder 2, dadurch gekennzeichnet, daß die Anzahl der die Vorsprünge aufweisenden Gewindegänge zwei oder drei beträgt.

4. Verfahren zum Herstellen einer Mutter nach einem der Ansprüche 1 bis 3, dadurch gekennzeichnet, daß in die Gewindeflanken der vordersten Gewindegänge des zum Einschneiden des Muttergewindes verwendeten Gewindebohrers Nuten eingefräst oder eingeschnitten werden und daß der Gewindebohrer beim Einschneiden des Gewindes in die Mutter zunächst in der einen Drehrichtung in die Mutter hineingeschraubt und anschließend mit entgegengesetzter Drehrichtung aus dieser wieder herausgeschraubt wird.

## Claims

1. A nut with an impeding action for the screwing in of a screwthreaded bolt, characterized in that the last turns of the screwthread of the nut as considered in the direction in which the screwbolt is screwed in are made with rib-like projections (30) projecting from the screwthread flanks.

2. A nut according to claim 1, characterised in that the rib-like projections project by about 0.05 mm beyond the screwthread flanks with respect to a standard M6 nut.

3. A nut according to claim 1 or 2, characterised in that the number of turns of the screwthread provided with projections is two or three.

4. A method of producing a nut according to any one of claims 1 to 3, characterised in that grooves are milled or cut into the flanks of the foremost turns of the screwthread of the tap used for cutting the nut thread, and in that when cutting the thread in the nut the tap is first screwed into the nut in one direction of rotation and then unscrewed therefrom in the opposite direction of rotation.

## Revendications

1. Ecrou avec inhibition au vissage d'une tige filetée, caractérisé en ce que les pas de taraudage, se trouvant les derniers dans la direction de vissage de la tige filetée, sur le taraudage de l'écrou, sont fabriqués avec des saillies (30) en forme de nervure, se projetant de leurs flancs taraudés.

2. Ecrou sur la selon la revendication 1, caractérisé en ce que les saillies en forme de nervures se projetent au-dessus des flancs taraudés d'à peut près 0,05 mm en se référant à un écrou normalisé M6.

3. Ecrou selon la revendication 1 ou 2, caractérisé en ce que le nombre des pas taraudés présentant les saillies et de deux ou trois

4. Procédé de fabrication d'un écrou selon l'une des revendication 1 à 3, caractérisé en ce que, dans les flancs taraudés des pas de taraudage, situés les plus à l'avant, du taraud utilisé pour découper le taraudage de l'écrou, on effectue un fraisage, ou une découpe, de gorges et en ce que le taraud, lors de l'usinage du taraudage dans l'écrou, est d'abord introduit avec vissage dans un sens de rotation dans l'écrou, puis en est sorti de nouveau, en tournant dans le sens opposé.
